(19) Europäisches Patentamt
European Patent Office
Office européen des brevets

(11) **EP 4 156 022 A1**

(12) **EUROPEAN PATENT APPLICATION**
published in accordance with Art. 153(4) EPC

(43) Date of publication:
**29.03.2023 Bulletin 2023/13**

(21) Application number: **21863714.8**

(22) Date of filing: **03.09.2021**

(51) International Patent Classification (IPC):
**G06K 9/62** $^{(2006.01)}$

(52) Cooperative Patent Classification (CPC):
**G06F 18/00; G06N 3/04; H04L 41/0677**

(86) International application number:
**PCT/CN2021/116527**

(87) International publication number:
**WO 2022/048652 (10.03.2022 Gazette 2022/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **04.09.2020 CN 202010921946**

(71) Applicant: **ZTE Corporation**
**Shenzhen, Guangdong 518057 (CN)**

(72) Inventors:
• **HAN, Junhua**
**Shenzhen, Guangdong 518057 (CN)**

• **BO, Kaitao**
**Shenzhen, Guangdong 518057 (CN)**
• **PENG, Xin**
**Shenzhen, Guangdong 518057 (CN)**
• **GUO, Huifeng**
**Shenzhen, Guangdong 518057 (CN)**
• **HE, Li**
**Shenzhen, Guangdong 518057 (CN)**
• **LI, Wei**
**Shenzhen, Guangdong 518057 (CN)**

(74) Representative: **Osterhoff, Utz**
**Bockermann Ksoll**
**Griepenstroh Osterhoff**
**Patentanwälte**
**Bergstraße 159**
**44791 Bochum (DE)**

(54) **FAULT LOCATION METHOD, ELECTRONIC DEVICE AND STORAGE MEDIUM**

(57) Embodiments of the present application relate to the field of computers, and in particular, to a fault location method, an electronic device, and a storage medium. Embodiments of the present application provide a fault location method, including: obtaining at least two objects to be tested in a network to be tested, feature data of the objects to be tested, and a relationship between the objects to be tested; generating an object relationship structure graph according to the at least two objects to be tested, the feature data of the objects to be tested, and the relationship; and locating a fault object in the network to be tested according to the object relationship structure graph and a preset fault location model, the fault location model being a graph neural network structure.

FIG. 1

**Description**

**CROSS-REFERENCE TO RELATED APPLICATIONS**

This application claims priority to Chinese Patent Application No. 202010921946.7, filed on September 4, 2020, the entire contents of which are incorporated herein by reference.

**TECHNICAL FIELD**

Embodiments of the present application relate to the field of computers, and in particular, to a fault location method, an electronic device, and a storage medium.

**BACKGROUND**

As the scale of the network becomes larger and larger, the structure of the network becomes more complex. When a network fault occurs, how to quickly locate the network fault is very important. Usually, the methods based on machine learning are used for fault location.

However, in the network fault location method based on machine learning, the feature information of network elements is mainly extracted for fault location, and the feature information of each network element is independent of each other, resulting in inaccurate fault location.

**SUMMARY**

In order to achieve the above objective, embodiments of the present application provide a fault location method, including: obtaining at least two objects to be tested in a network to be tested, feature data of the objects to be tested, and a relationship between the objects to be tested; generating an object relationship structure graph according to the at least two objects to be tested, the feature data of the objects to be tested, and the relationship; and locating a fault object in the network to be tested according to the object relationship structure graph and a preset fault location model, the fault location model being a graph neural network structure.

In order to achieve the above objective, embodiments of the present application further provide an electronic device, including: at least one processor; and a memory communicated with the at least one processor, the memory stores instructions executable by the at least one processor, and the instructions are executed by the at least one processor, to cause the at least one processor execute the fault location method as described above.

In order to achieve the above objective, embodiments of the present application further provide a computer-readable storage medium, characterized in that, a computer program is stored in the computer-readable storage medium, and when the computer program is executed by a processor, the fault location method as described above is implemented.

**BRIEF DESCRIPTION OF THE DRAWINGS**

FIG. 1 is a flowchart of a fault location method according to a first embodiment of the present application.

FIG. 2 is a flowchart of a fault location method according to a second embodiment of the present application.

FIG. 3 is a flowchart of a fault location method according to a third embodiment of the present application.

FIG. 4 is a schematic diagram of edges in a fault location method according to a third embodiment of the present application.

FIG. 5 is a schematic diagram of edges in a fault location method according to a third embodiment of the present application.

FIG. 6 is a schematic diagram of an object relationship structure graph in a fault location method according to a third embodiment of the present application.

FIG. 7 is a schematic diagram of aggregation sample nodes in a fault location method according to a third embodiment of the present application.

FIG. 8 is a structural block diagram of an electronic device according to a fourth embodiment of the present application.

## DETAILED DESCRIPTION OF THE EMBODIMENTS

In order to make the objectives, technical solutions and advantages of the embodiments of the present application clearer, each embodiment of the present application will be described in detail below with reference to the accompanying drawings. However, those of ordinary skill in the art can understand that, in each embodiment of the present application, many technical details are provided for the reader to better understand the present application. However, even without these technical details and various changes and modifications based on the following embodiments, the technical solutions claimed in the present application can be realized. The following divisions of the various embodiments are for the convenience of description, and should not constitute any limitation on the specific implementation of the present application, and the various embodiments may be combined with each other and referred to each other on the premise of not contradicting each other.

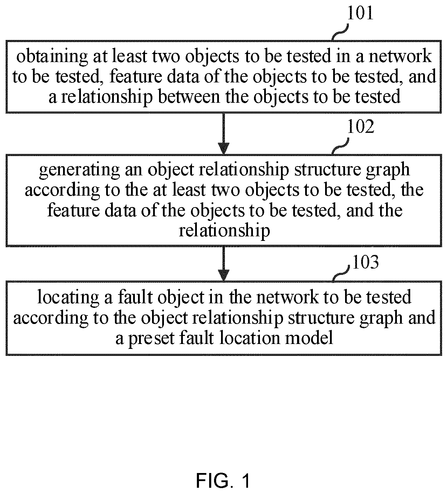

A first embodiment of the present application relates to a fault location method, including the following operations shown in FIG. 1.

Operation 101, obtaining at least two objects to be tested in a network to be tested, feature data of the objects to be tested, and a relationship between the objects to be tested.

Operation 102, generating an object relationship structure graph according to the at least two objects to be tested, the feature data of the objects to be tested, and the relationship.

Operation 103, locating a fault object in the network to be tested according to the object relationship structure graph and a preset fault location model, the fault location model being a graph neural network structure.

The present application provides a fault location method, including: obtaining the objects to be tested in the network to be tested and the relationship between the objects to be tested; generating an object relationship structure graph according to the objects to be tested and the relationship between the objects to be tested; converting the network to be tested into a map form, and locating the fault object in the network to be tested according to the preset fault location model. The fault location model is obtained based on graph neural network training. The graph neural network encodes the central node through the surrounding nodes, and makes full use of the relationship between the surrounding nodes and the central node during the training process, such that the located fault node is more accurate, and the fault is located through the graph neural network model and the object relationship structure graph, to make the located fault object more accurate.

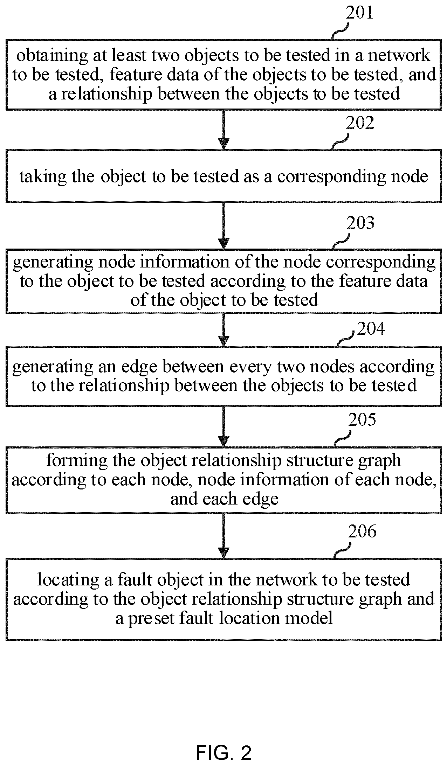

A second embodiment of the present application relates to a fault location method. The fault location method is applied to an electronic device, such as a server and the like. The second embodiment is an illustration of operations 101-103 in the first embodiment, and the flowchart is as shown in FIG. 2.

Operation 201, obtaining at least two objects to be tested in a network to be tested, feature data of the objects to be tested, and a relationship between the objects to be tested.

In some embodiments, the fault location method in this example is mainly used to locate faults in the network. The network to be tested can be any kind of network, for example, clock and time synchronization network, synchronous digital hierarchy (SDH) network, packet transport network (PTN), IP radio access network (IPRAN), optical transport network (OTN), IP network, etc. The object to be tested is an object in the network to be tested that needs to locate a fault, for example, a network element, an optical fiber link, etc. in the network to be tested.

The feature data of the object to be tested can be obtained by means of collection. The feature data may be alarm data or performance data in the object to be tested, and may also include both alarm data and performance data. The relationship can be a connection relationship between the objects to be tested, and the relationship between the objects to be tested can be detected through data transmission.

Operation 202, taking the object to be tested as a corresponding node.

In some embodiments, the object to be tested can be used as a node. For example, if the object to be tested is a network element, then each network element can be converted into a corresponding node. If the object to be tested also includes an optical fiber link, then the optical fiber link can be converted into a corresponding node. The object to be tested may be both the network element and the optical fiber link, the network element in the network to be tested is used as a corresponding node, and the optical fiber link is used as a corresponding node.

Operation 203, generating node information of the node corresponding to the object to be tested according to the feature data of the object to be tested.

In an embodiment, according to the number of types of the feature data, the feature data is converted into a feature vector with a dimension equal to the number of types, and the feature vector is used as the node information of the node.

In an embodiment, the number of types of feature data is obtained. For example, if the feature data of the object to be measured includes multiple alarms, the number $N$ of types of the alarm data is obtained. If the feature data includes performance data, then the number $M$ of types of performance data is obtained. If the feature data includes both the alarm data and the performance data, the number of types of alarm data is N, and the number of types of performance data is M, then the number of types of the feature data is N+M.

In an embodiment, if the feature data includes alarm data, the alarm data is converted into digital code data, the digital code data is used as the feature vector, and the feature vector is used as node information of the node.

In an embodiment, since the alarm data can be character data, in order to unify the data form, the alarm data can be converted into digital code data, and the digital code data can be used as feature data, for example, the alarm data can be expressed in the form of 0 and 1 codes. Each type of alarm corresponds to a feature dimension. If an alarm exists, this dimension is represented as 1, otherwise it is represented as 0. If there are N different types of alarm data, an N-dimensional feature vector will be obtained, and the N-dimensional feature vector is recorded as the node information of the node.

In an embodiment, if the feature data includes the performance data of the object to be tested, the performance data is normalized, and the normalized performance data is used as the feature vector; or, the performance data is dispersed into each discrete numerical interval according to at least two preset discrete numerical intervals, and a value corresponding to the discrete numerical interval in which the performance data is located is obtained as the feature vector.

In an embodiment, if the feature data includes performance data, the value of the performance data can be directly taken as the value in the feature vector. In order to facilitate the representation of the feature vector, the performance data can also be normalized or discretized. The normalization refers to normalizing the performance data representation interval between 0 and 1. The discretization refers to setting one or more thresholds, through which multiple discrete numerical intervals can be obtained. According to the threshold, the performance data may be dispersed into discrete numerical intervals, and the numerical value corresponding to the discrete numerical interval in which the performance data is located is used as the value of the feature vector. For example, if the threshold is 1 and two discrete numerical intervals are corresponded, the performance value is dispersed into discrete numerical interval 1, and the value corresponding to the discrete numerical interval 1 is represented as 1. Otherwise, the performance value is dispersed into a discrete numerical interval 0, and the value corresponding to the discrete numerical interval 0 is represented as 0. If it corresponds to multiple thresholds, according to the multiple thresholds, it is divided into different discrete numerical intervals, from low to high, each discrete numerical interval corresponds to a numerical value. If the performance data is in the discrete numerical interval, the value corresponding to the discrete numerical interval is obtained. If 3 thresholds are set, they can be divided into 4 discrete numerical intervals, corresponding to 0, 1, 2, and 3 respectively.

Operation 204, generating an edge between every two nodes according to the relationship between the objects to be tested.

In an embodiment, the relationship between each object to be tested is regarded as the edge between every two nodes. For example, the network element A is connected to the network element B, then an edge is generated between corresponding node A and node B.

Operation 205, forming the object relationship structure graph according to each node, node information of each node, and each edge.

The node, the node information of the node, and each edge are combined to form the object relationship structure graph.

Operation 206, locating the fault object in the network to be testes according to the object relational structure graph and the preset fault location model.

In an embodiment, the fault location model is pre-trained based on the graph neural network structure, and the fault location model can be trained based on the node classification model of the graph neural network.

In order to facilitate the understanding of this example, the graph neural network is introduced below.

The mathematical description of the propagation mechanism of the graph neural network is shown in formula (1):

$$ h_v^k = \sigma \left( \left[ W_k \, AGG \left( \left\{ h_u^{k-1}, \forall u \in N(v) \right\} \right), B_k h_v^{k-1} \right] \right) \quad \text{formula (1)} $$

h represents the representation vector of the node (denoted as "Embedding"), the subscript v represents the index of the current node, u represents the index of the node adjacent to the V node, the superscript k represents that the adjacent node is at the k layer, $\sigma$ represents the activation function, $W_k$ and $B_k$ represent the matrix, N(v) represents the set of neighbor nodes of node v, and AGG(*) represents the aggregation operation. When k is equal to 0, $h_v^0 = x_v$. $x_v$ is the input feature vector of node v.

The basic version of the propagation mechanism of the graph neural network is to use the average method when aggregating the neighbor node information of the node, and use the neural network to perform the aggregation operation. The node information of each node may be a representation vector h of the node. The mathematical description of the propagation mechanism is shown in formula (2):

$$h_v^k = \sigma\left( W_k \sum_{u \in N(v)} \frac{h_u^{k-1}}{|N(v)|} + B_k h^{k-1} \right), \forall k > 0$$

formula (2)

It can be understood that formula (2) is the basic version of the propagation mechanism of the graph neural network, and other versions of the graph neural network propagation mechanism can also be used. According to different propagation mechanisms, the graph neural networks can be divided into Graph Convolutional Networks (GCN), Graph Attention Networks (GAN), Gated Graph Neural Networks, Graph Isomorphism Networks (GIN) and Graph SAGE Networks, etc.

In this embodiment, according to the preset fault location model based on graph neural network training, the sample structure graph in the training set is trained to obtain the network parameters in the fault location model, the fault location model is verified by the test sample set, and then the network parameters are adjusted to obtain the fault location model.

The sample structure graph in the training set may include nodes and node relationship information, node labels and node feature data, etc. Node labels can be divided into faulty nodes and normal nodes according to the needs of fault location scenarios, or can be divided into fault root nodes, fault affected nodes, and normal nodes. The source of the sample network to be tested in the sample structure graph includes the network environment based on the simulated network environment in the laboratory and the network environment in use on the live network. The sample structure graph can also be formed based on the data of the same sample network to be tested acquired at different times.

According to the needs of fault location, an end-to-end fault location model based on graph neural network is established. The graph neural network can choose a graph neural network model with node classification capabilities, including but not limited to the following neural network model, such as Graph Convolutional Networks (GCN), Graph Attention Networks (GAN), Gated Graph Neural Networks, Graph Isomorphism Networks (GIN) and Graph SAGE Networks, etc.

It is necessary to add a classifier after the embedding of the node to classify nodes, which is responsible for mapping the embedding obtained after propagating each node through the graph neural network to the corresponding category output. In this example, the softmax classifier is used as an example, and other classifiers can also be selected. In addition, a corresponding loss function needs to be designed to measure the deviation degree between the value predicted by the model and the actual value, so that the established node classification model based on graph neural network can be trained. Commonly used loss functions include cross-entropy loss function, 0-1 loss function, square loss function, absolute loss function, logarithmic loss function, and exponential loss function. For example, in this embodiment, the cross-entropy loss function is used as an example.

The training sample set is used to train the established fault location model based on graph neural network structure. After the model training is completed, the test sample set is used to verify the effect of model node classification. When the accuracy of node classification reaches the standard for actual business use, the parameters obtained from model training can be solidified for specific fault location applications.

In an embodiment, the object relational structure graph and the position of the fault object in the object relational structure graph are displayed.

The results of each object in the network to be tested can be displayed in the form of a topology map or a list, which is intuitively presented in the form of a topology map, and different node types need to be rendered with different background colors. For example, for faulty nodes, red background color can be used for rendering. For the nodes and edges that will affect the fault propagation direction, it can be rendered with yellow or orange background color. For normal nodes and edges, it can be rendered with green or a base color without any color. Presented in the form of a list, the faulty node and the normal node can be distinguished by adding a column.

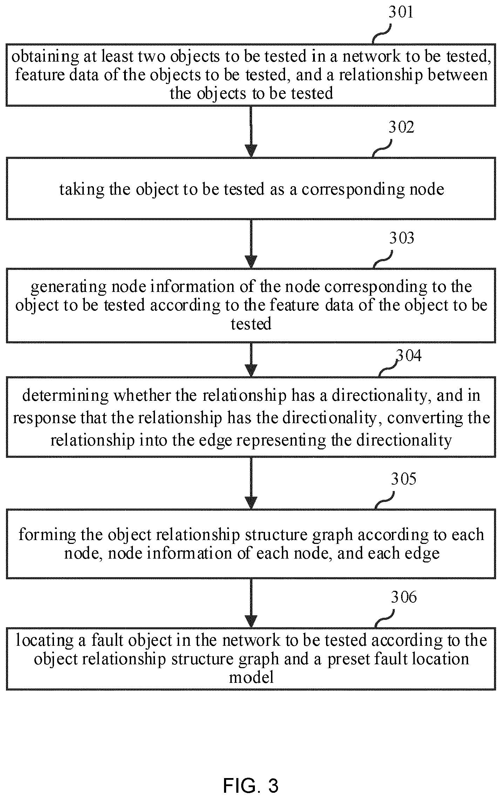

A third embodiment of the present application relates to a fault location method. The third embodiment is a further improvement on the second embodiment. The main improvement is that in this embodiment whether there is directionality in the relationship, if there is directionality, the relationship is converted into an edge with directionality. The process is shown in FIG. 3.

Operation 301, obtaining at least two objects to be tested in a network to be tested, feature data of the objects to be tested, and a relationship between the objects to be tested.

Operation 302, taking the object to be tested as a corresponding node.

Operation 303, generating node information of the node corresponding to the object to be tested according to the feature data of the object to be tested.

Operations 301 to 303 in this embodiment are substantially the same as operations 201 to 203 in the second embodiment, and will not be repeated herein.

Operation 304, determining whether the relationship has a directionality, and in response that the relationship has the directionality, converting the relationship into the edge representing the directionality.

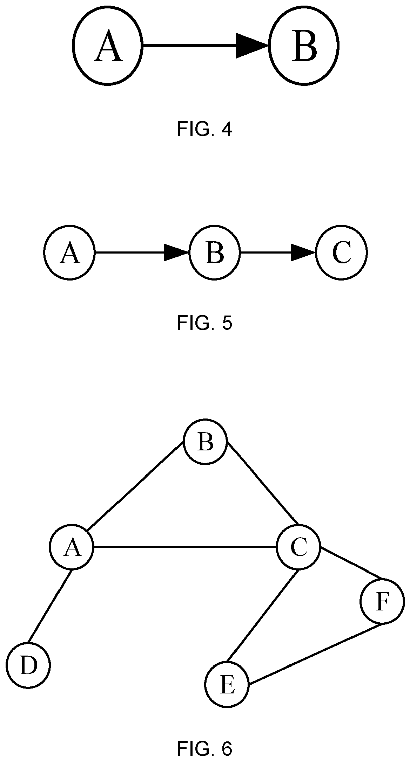

In an embodiment, whether the relationship has a directionality is determined, and if the relationship has the directionality, the relationship is abstracted into a directional edge. For example, if network element A unidirectionally transmits data to network element B, the relationship between network element A and network element B has directionality. Then, an edge as shown in FIG. 4 can be formed, that is, node A points to node B. If there are both optical fiber links and network elements in the object to be tested, the data of node A is transmitted to node C through the input port 1 of the optical fiber, and the output port 2, the optical fiber link acts as node B, and an edge as shown in FIG. 5 can be formed. Each edge has corresponding edge information, and the edge information includes a source end and a destination end. For example, the source end is node A, and the destination end is input port 1 of the optical fiber link.

If the relationship has no directionality, the relationship is directly converted into a corresponding edge to form an undirected graph.

Operation 305, forming the object relationship structure graph according to each node, node information of each node, and each edge.

This operation is substantially the same as operation 205 in the second embodiment, and will not be repeated herein.

Operation 306, locating a fault object in the network to be tested according to the object relationship structure graph and a preset fault location model.

In an embodiment, the training process of the fault location model can include: obtaining a sample structure graph in a training set, wherein the sample structure graph is generated by sample objects in a sample network and a relationship between the sample objects; in response that an edge in the sample structure graph has a directionality, performing following aggregation processing for each sample node during a process of training the sample structure graph: aggregating node information of the sample node and node information of adjacent nodes of the sample node in a propagation direction, wherein the adjacent nodes are other sample nodes that are within a preset distance from the sample node.

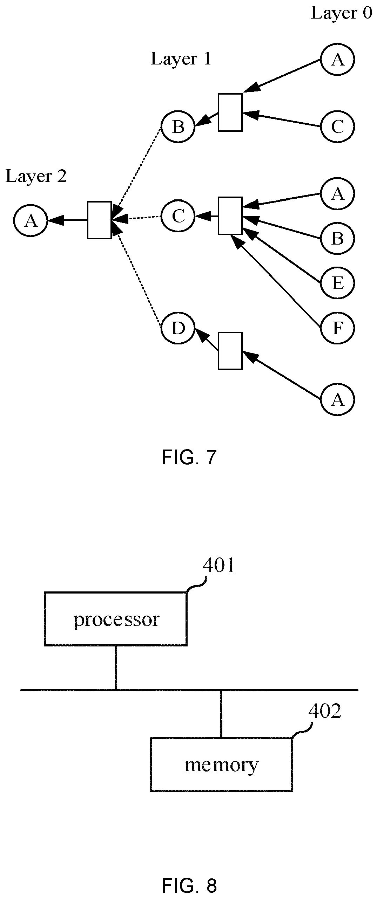

In some embodiments, the adjacent nodes of each sample node can be other sample nodes within a preset distance from the sample node, and the distance between sample nodes can be represented by the layer number of the layer where the adjacent node is located. For example, as shown in FIG. 6 and FIG. 7, if the A node is aggregated, the rectangle in FIG. 7 represents the aggregation, and k is set to 2, then the adjacent node is a sample node within 2 layers of the A node.

The 0th layer is the input layer, and the characterization vector of the 0th layer is the initial Embedding of each sample node. Layer 1: The Embedding of the sample node B is propagated from the Embedding of its neighbor nodes A and C. The Embedding of the sample node C is propagated from the Embedding of the nodes A, B, E, and F. The Embedding of sample node D is propagated from the Embedding of its sample node A. Layer 2: The Embedding of the sample node A is propagated from the Embedding of its nodes B, C, and D. That is to say, adjacent nodes of sample node A refer to nodes B, C, and D of layer 1; and sample nodes A, C, B, E, and F of layer 0. During the aggregation operation, the node information of the sample node A and the node information of the adjacent nodes of the sample node A are aggregated according to the calculation method of formula (1). Since the preset distance is set to 2, k=2 in formula (1) can be preset.

It is worth mentioning that if the fault propagation has directionality, a directed graph is established. When using the graph neural network to aggregate the feature information of the surrounding adjacent nodes, the feature information of the adjacent nodes in the fault propagation direction can be aggregated and calculated. The calculation cost can be reduced, the interference of adjacent but irrelevant node information can be avoided, and the accuracy of the fault location model can be improved.

In the following example, a network to be tested is used as an example to introduce the entire fault location process.

Scenario 1: The network to be tested is a clock synchronization network.

The clock synchronization network is mainly responsible for synchronizing the clock frequency of each network device in the network, and controlling the clock frequency deviation of each network device within the required range. Clock synchronization is directional, that is, the clock frequency is synchronized from an upstream network device to a downstream network device. When a fault occurs, it has the directionality of fault propagation, that is, a fault in the upstream network device will cause an abnormality in the downstream network device. The goal of fault location is to quickly find the faulty network device when the clock synchronization network fails.

The object to be tested and the relationship between the objects to be tested in the fault diagnosis of the clock synchronization network are converted into nodes and edges, and an object relationship structure graph is generated. For the clock synchronization network, the objects to be tested include network elements, physical fiber links and external clock sources, which are converted into nodes. The connections between network elements, physical fiber links, and external clock sources are converted into edges. For example, the object to be tested is a network element, and an edge is established according to a link relationship between the network elements. Since there is directionality in the fault propagation of the clock synchronization network, the relationship is converted into a directed edge. By collecting the network elements, physical fiber links and external clock source information of the clock synchronization network, the corresponding nodes, edges and node information of each node are obtained, and a directional object relationship structure graph is formed.

Clock alarm data and performance data of network elements can be collected as feature data of the object to be tested. For a physical optical fiber link, the alarm data and the performance data generated by the physical ports connecting the two ends of the physical optical fiber link can be used as its feature data. For an external clock source, network elements connected to the external clock source can be collected, and related clock alarm data and performance data can be used as its feature data.

The feature data of each node is converted into a feature vector. For the alarm data, in this example, 0 and 1 encoding are used to convert the alarm data into a feature vector, which means that for each type of alarm related to the clock, there is a corresponding feature dimension. If the alarm exists, it is represented by a value of 1, otherwise, it is represented by a value of 0. For each node: If there are N different types of feature alarms, an N-dimensional feature vector will be obtained. For performance data, in this example, the normalization method is used to process the performance data, and the performance value is normalized to a range of 0 to 1 for representation. A type of performance data corresponds to a feature dimension. If there are M types of feature performance indicators, then an M-dimensional feature vector is obtained. The feature vectors of the alarm data and the performance data are spliced together to obtain an N+M-dimensional feature vector, and the N+M-dimensional feature vector is used as the node information of the node.

According to the needs of fault location scenarios, the types of nodes in the object relational structure graph can be divided, for example, they can be divided into fault nodes and normal nodes, or they can be divided into fault root nodes, fault affected nodes and normal nodes. In this example, the types of nodes are divided into fault nodes and normal nodes.

Before training the fault location model, multiple sample structure graphs are obtained to form a training set. The sample structure graphs include nodes, edge information, node labels, and node information. The sources of the sample structure graph include the simulated network environment based on the laboratory and the real network environment in use on the live network.

After obtaining the training set, an end-to-end fault location model based on the graph neural network is preset. The graph neural network model can be a graph attention network, the node classifier can be a softmax classifier, and the loss function can be a cross-entropy loss function. The input of the fault location model is each node, edge and node feature vector in the graph, and the output is the type label of each node. It should be noted that when performing the aggregation calculation of the graph neural network, the adjacent nodes in the fault propagation direction are aggregated.

The node classification model based on the graph neural network established by the training set is used to train the fault location model. A training sample structure graph includes the labels and feature vectors of each node, edge, and node in the graph. After the model training is completed, the test set is used to verify the effect of the model training. A test sample structure graph also contains the labels and feature vectors of each node, edge, and node in the graph. The network parameters of the fault location model are continuously updated through training and verification. When the accuracy of fault location reaches the standard for actual business use, the parameters obtained from model training can be solidified to generate a fault location model.

The process of locating the fault object in the network to be tested based on the trained fault location model includes the following operations. First, the information of the clock synchronization network that needs to locate the fault is collected, including information such as the objects to be tested, the relationship between each object to be tested, and the feature data of each object to be tested.

Then, the collected feature data is preprocessed and converted into digital code data. The converted digital code data is used as the feature vector of the node, the object to be tested is used as the node, and the relationship between objects is used as the edge, and the object relationship structure graph is generated according to the node, node information, and edge. The obtained object relationship structure graph is input into the fault location model to obtain the node type of each node, and the object relationship structure graph includes nodes, node information and edges. If the node type is a faulty node type, the location of the faulty node is obtained, and the location of the faulty location is completed.

The results of each object in the network to be tested can be displayed in the form of a topology map or a list, which is intuitively presented in the form of a topology map, and different node types need to be rendered with different background colors. For example, for faulty nodes, red background color can be used for rendering. For the nodes and edges that will affect the fault propagation direction, it can be rendered with yellow or orange background color. For normal nodes and edges, it can be rendered with green or a base color without any color. Presented in the form of a list, the faulty node and the normal node can be distinguished by adding a column.

The fault location model in this example utilizes the feature information of clock synchronization network nodes, and also makes full use of the feature information of adjacent nodes around the node. Through the graph neural network, the fault feature information of the object to be tested in the network can be more fully utilized, and the accuracy of fault location is higher. Meanwhile, the clock synchronization network has the directionality of fault propagation. When the feature information of neighboring nodes is aggregated based on the graph neural network, the node information in the fault propagation direction and the node information of the adjacent nodes are aggregated and calculated, which can reduce the calculation cost and reduce the interference of irrelevant node information.

Scenario 2: The network to be tested is a bearer network.

The bearer network is mainly responsible for the transmission of service data, and can provide services such as Layer 2 Virtual Private Network L2VPN or Layer 3 Virtual Private Network L3VPN. Data transmission on the bearer network includes two directions: sending and receiving. Therefore, the direction of fault propagation includes two directions. When a network element node or a physical fiber link on the bearer network fails, it will affect the surrounding adjacent data transmission nodes. Fault propagation may exist in both directions. Therefore, in this example, fault propagation is non-directional. The goal of fault location is to quickly find the faulty node when the bearer network fails.

For the bearer network, the object to be tested includes network element and physical optical fiber link, and the object to be tested is regarded as a node. The relationship between the network element and the physical optical fiber link is regarded as an edge. Fault propagation on the bearer network is non-directional and the undirected edge is generated. The node information of the corresponding node is obtained by collecting the information of the network element node and the physical fiber link of the bearer network, and an object relationship structure graph of the bearer network is generated according to the node, node information and edge, and the object relationship structure graph is an undirected graph.

Clock alarm data and performance data of network elements can be collected as feature data of the object to be tested. For a physical optical fiber link, the alarm data and performance data generated by the physical ports connecting the two ends of the physical optical fiber link can be used as its feature data. For an external clock source, network elements connected to the external clock source can be collected, and related clock alarm data and performance data can be used as its feature data.

The feature data of each node is converted into a feature vector. For the alarm data, in this example, 0 and 1 encoding are used to convert the alarm data into a feature vector, which means that for each type of alarm related to the clock, there is a corresponding feature dimension. If the alarm exists, it is represented by a value of 1, otherwise, it is represented by a value of 0. For each node: If there are N different types of feature alarms, an N-dimensional feature vector will be obtained. For performance data, in this example, the normalization method is used to process the performance data, and the performance value is normalized to a range of 0 to 1 for representation. A type of performance data corresponds to a feature dimension. If there are M types of feature performance indicators, then an M-dimensional feature vector is obtained. The feature vectors of the alarm data and the performance data are spliced together to obtain an N+M-dimensional feature vector, and the N+M-dimensional feature vector is used as the node information of the node.

According to the needs of fault location scenarios, the types of nodes in the object relational structure graph can be divided, for example, they can be divided into fault nodes and normal nodes, or they can be divided into fault root nodes, fault affected nodes and normal nodes. In this example, the types of nodes are divided into fault nodes and normal nodes.

Before training the fault location model, multiple sample structure graphs are obtained to form a training set. The sample structure graphs include nodes, edge information, node labels, and node information. The sources of the sample structure graph include the simulated network environment based on the laboratory and the real network environment in use on the live network.

After obtaining the training set, an end-to-end fault location model based on the graph neural network is preset. The graph neural network model can be a graph attention network, the node classifier can be a softmax classifier, and the loss function can be a cross-entropy loss function. The input of the fault location model is each node, edge and node feature vector in the graph, and the output is the type label of each node. It should be noted that when performing the aggregation calculation of the graph neural network, since the fault propagation is not directional, when performing the aggregation operation on each node, it is necessary to aggregate the node and all adjacent nodes around the node for aggregation calculation.

The training set is used to train the fault location model based on graph neural network. A training sample structure graph includes the labels and feature vectors of each node, edge, and node in the graph. After the model training is completed, the test set is used to verify the effect of the model training. A test sample structure graph also contains the labels and feature vectors of each node, edge, and node in the graph. The network parameters of the fault location model are continuously updated through training and verification. When the accuracy of fault location reaches the standard for actual business use, the parameters obtained from model training can be solidified to generate a fault location model.

The process of locating the fault object in the network to be tested based on the trained fault location model includes the following operations. First, the information of the clock synchronization network that needs to locate the fault is collected, including information such as the objects to be tested, the relationship between each object to be tested, and the feature data of each object to be tested. Then, the collected feature data is preprocessed and converted into digital code data. The converted digital code data is used as the feature vector of the node, the object to be tested is used as the node, and the relationship between objects is used as the edge, and the object relationship structure graph is generated according to the node, node information, and edge. The obtained object relationship structure graph is input into the fault location model to obtain the node type of each node, and the object relationship structure graph includes nodes, node information and edges. If the node type is a faulty node type, the location of the faulty node is obtained, and the location of the faulty location is completed.

The results of each object in the network to be tested can be displayed in the form of a topology map or a list, which is intuitively presented in the form of a topology map, and different node types need to be rendered with different background colors. For example, for faulty nodes, red background color can be used for rendering. For the nodes and edges that will affect the fault propagation direction, it can be rendered with yellow or orange background color. For normal nodes and edges, it can be rendered with green or a base color without any color. Presented in the form of a list, the faulty node and the normal node can be distinguished by adding a column.

A fourth embodiment of the present application relates to an electronic device, the structural block diagram of which is shown in FIG. 8. The electronic device includes at least one processor 401 and a memory 402 communicated with the at least one processor 401. The memory 402 stores instructions executable by the at least one processor 401, when the instructions are executed by the at least one processor 401, the at least one processor 401 can perform the fault location method as described above.

The memory and the processor are connected by a bus. The bus may include any number of interconnected buses and bridges that connect together the various circuits of one or more processors and memory. The bus may also connect together various other circuits, such as peripherals, voltage regulators, and power management circuits, which are well known in the art and therefore will not be described further herein. The bus interface provides the interface between the bus and the transceiver. A transceiver may be a single element or multiple elements, such as multiple receivers and transmitters, providing a means for communicating with various other devices over a transmission medium. The data processed by the processor is transmitted on the wireless medium through the antenna. Besides, the antenna also receives the data and transmits the data to the processor.

The processor is responsible for managing the bus and general processing, and may also provide various functions including timing, peripheral interface, voltage regulation, power management, and other control functions. The memory may store data used by the processor when performing operations.

A fifth embodiment of the present application relates to a computer-readable storage medium storing a computer program. When the computer program is executed by the processor, the above fault location method is realized.

Those skilled in the art can understand that all or part of the operations in the method of the above embodiments can be completed by instructing the relevant hardware through a program. The program is stored in a storage medium, and includes several instructions to cause a device (which may be a single-chip microcomputer, a chip, etc.) or a processor to execute all or part of the operations of the methods described in the various embodiments of the present application. The aforementioned storage medium includes: U disk, removable hard disk, readonly memory (ROM), random access memory (RAM), magnetic disk or optical disk and other media that can store program codes.

Those of ordinary skill in the art can understand that the above-mentioned embodiments are specific embodiments for realizing the present application. However, in practical application, various changes in form and details may be made therein without departing from the spirit and scope of the present application.

**Claims**

1. A fault location method, **characterized by** comprising:

   obtaining at least two objects to be tested in a network to be tested, feature data of the objects to be tested, and a relationship between the objects to be tested;
   generating an object relationship structure graph according to the at least two objects to be tested, the feature data of the objects to be tested, and the relationship; and
   locating a fault object in the network to be tested according to the object relationship structure graph and a preset fault location model, the fault location model being a graph neural network structure.

2. The fault location method according to claim 1, wherein the obtaining at least two objects to be tested in the network to be tested, feature data of the objects to be tested, and the relationship between the objects to be tested comprises:

   taking the object to be tested as a corresponding node;
   generating node information of the node corresponding to the object to be tested according to the feature data of the object to be tested;
generating an edge between every two nodes according to the relationship between the objects to be tested; and
forming the object relationship structure graph according to each node, node information of each node, and each edge.

3. The fault location method according to claim 2, wherein the generating the edge between every two nodes according to the relationship between the objects to be tested comprises:
determining whether the relationship has a directionality, and in response that the relationship has the directionality, converting the relationship into the edge representing the directionality.

4. The fault location method according to claim 2 or 3, wherein the generating node information of the node corresponding to the object to be tested according to the feature data of the object to be tested comprises:

   obtaining a number of types of the feature data;
   converting the feature data into a feature vector with a dimension equal to the number of types; and
   using the feature vector as the node information of the node.

5. The fault location method according to claim 4, wherein in response that the feature data comprises performance data of the object to be tested;
the converting the feature data into the feature vector with the dimension equal to the number of types comprises:

   normalizing the performance data, and using the normalized performance data as the feature vector; or
   dispersing the performance data into each discrete numerical interval according to at least two preset discrete numerical intervals, and obtaining a value corresponding to the discrete numerical interval in which the performance data is located as the feature vector.

6. The fault location method according to claim 4, wherein in response that the feature data comprises alarm data;
the converting the feature data into the feature vector with the dimension equal to the number of types comprises:

   converting the alarm data into digital code data; and
   using the digital code data as the feature vector.

7. The fault location method according to claim 4, wherein before the locating the fault object in the network to be tested according to the object relationship structure graph and the preset fault location model, the fault location method further comprises:

   obtaining a sample structure graph in a training set, wherein the sample structure graph is generated by sample objects in a sample network and a relationship between the sample objects;
   in response that an edge in the sample structure graph has a directionality, performing following aggregation processing for each sample node during a process of training the sample structure graph:
   aggregating node information of the sample node and node information of adjacent nodes of the sample node in a propagation direction, wherein the adjacent nodes are other sample nodes that are within a preset distance from the sample node.

8. The fault location method according to any one of claims 1 to 7, wherein after the locating the fault object in the network to be tested according to the object relationship structure graph and the preset fault location model, the fault location method further comprises:
displaying the object relationship structure graph and a position of the fault object in the object relationship structure graph.

9. An electronic device, **characterized by** comprising:

   at least one processor; and
   a memory communicated with the at least one processor,
   wherein the memory stores instructions executable by the at least one processor, and the instructions are executed by the at least one processor, to cause the at least one processor execute the fault location method according to any one of claims 1 to 8.

**10.** A computer-readable storage medium, **characterized in that**, a computer program is stored in the computer-readable storage medium, and when the computer program is executed by a processor, the fault location method according to any one of claims 1 to 8 is implemented.

101

obtaining at least two objects to be tested in a network
to be tested, feature data of the objects to be tested, and
a relationship between the objects to be tested

102

generating an object relationship structure graph
according to the at least two objects to be tested, the
feature data of the objects to be tested, and the
relationship

103

locating a fault object in the network to be tested
according to the object relationship structure graph and
a preset fault location model

FIG. 1

201

obtaining at least two objects to be tested in a network to be tested, feature data of the objects to be tested, and a relationship between the objects to be tested

202

taking the object to be tested as a corresponding node

203

generating node information of the node corresponding to the object to be tested according to the feature data of the object to be tested

204

generating an edge between every two nodes according to the relationship between the objects to be tested

205

forming the object relationship structure graph according to each node, node information of each node, and each edge

206

locating a fault object in the network to be tested according to the object relationship structure graph and a preset fault location model

FIG. 2

301

obtaining at least two objects to be tested in a network to be tested, feature data of the objects to be tested, and a relationship between the objects to be tested

302

taking the object to be tested as a corresponding node

303

generating node information of the node corresponding to the object to be tested according to the feature data of the object to be tested

304

determining whether the relationship has a directionality, and in response that the relationship has the directionality, converting the relationship into the edge representing the directionality

305

forming the object relationship structure graph according to each node, node information of each node, and each edge

306

locating a fault object in the network to be tested according to the object relationship structure graph and a preset fault location model

FIG. 3

FIG. 4

FIG. 5

FIG. 6

Layer 0

Layer 1

Layer 2

FIG. 7

401

processor

402

memory

FIG. 8

## INTERNATIONAL SEARCH REPORT

| | International application No. |
|---|---|
| | **PCT/CN2021/116527** |

| A. | CLASSIFICATION OF SUBJECT MATTER |
|---|---|

H04L 12/24(2006.01)i

According to International Patent Classification (IPC) or to both national classification and IPC

| B. | FIELDS SEARCHED |
|---|---|

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

CNKI, CNPAT, WPI, EPODOC: 故障, 错误, 异常, 特征, 关联, 联系, 关系, 结构, 模型, 神经, 方向, 向量, failure, error, feature, association, connection, relationship, structure, model, nerve, direction, vector

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 106998256 A (TENCENT TECHNOLOGY SHENZHEN CO., LTD.) 01 August 2017 (2017-08-01)<br>  description, paragraphs [0035]-[0155] and [0180]-[0187] | 1-10 |
| A | CN 111538872 A (TAIPING FINANCE TECHNOLOGY SERVICES (SHANGHAI) CO., LTD.) 14 August 2020 (2020-08-14)<br>  entire document | 1-10 |
| A | US 2017236000 A1 (SAMSUNG ELECTRONICS CO., LTD. et al.) 17 August 2017 (2017-08-17)<br>  entire document | 1-10 |
| A | US 2020242506 A1 (OPTUM SERVICESIRELAND LIMITED) 30 July 2020 (2020-07-30)<br>  entire document | 1-10 |

☐ Further documents are listed in the continuation of Box C.   ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **15 November 2021** | **25 November 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/116527**

| Patent document cited in search report | | | Publication date (day/month/year) | Patent family member(s) | | | Publication date (day/month/year) |
|---|---|---|---|---|---|---|---|
| CN | 106998256 | A | 01 August 2017 | None | | | |
| CN | 111538872 | A | 14 August 2020 | None | | | |
| US | 2017236000 | A1 | 17 August 2017 | KR | 20170096492 | A | 24 August 2017 |
| US | 2020242506 | A1 | 30 July 2020 | None | | | |

Form PCT/ISA/210 (patent family annex) (January 2015)

**REFERENCES CITED IN THE DESCRIPTION**

**Patent documents cited in the description**

- CN 202010921946